# EUROPÄISCHE PATENTANMELDUNG

(11) **EP 2 325 720 A2**
(43) Veröffentlichungstag der Anmeldung: **25.05.2011**
(21) Anmeldenummer: 10188587.9
(22) Anmeldetag: 22.10.2010
(51) Int. Cl.: G06F 1/18

(54) **Computergehäuse mit einem Einschubschacht für Einschubgehäuse von Computerkomponenten, Einschubgehäuse für Computerkomponente sowie entsprechende Anordnung**

(30) Priorität: 28.10.2009 DE 102009050980
(71) Anmelder: Fujitsu Technology Solutions Intellectual Property GmbH, 80807 München (DE)
(72) Erfinder: Neukam, Wilhelm, 86399, Bobingen (DE)
(74) Vertreter: Epping - Hermann - Fischer

(57) **Zusammenfassung**

Die Erfindung betrifft ein Computergehäuse (9) mit einem Einschubschacht (10) für Einschubgehäuse (1) von Computerkomponenten (2), aufweisend eine Befestigungsvorrichtung zum Fixieren eines Einschubgehäuses (1) im Einschubschacht (10). Erfindungsgemäß umfasst die Befestigungsvorrichtung ein Federelement (11) als Befestigungselement, welches mit einem ersten Ende an der Außenseite des Einschubschachtes (10) festgelegt ist und über eine stumpfwinklige Abwinkelung (13) in den Einschubschacht (10) hineintaucht und über einen spitzen oder rechten Winkel mit einer Kante (14) wieder aus dem Einschubschacht (10) hinausläuft und in ein freies zweites Ende (15) mündet. Mittels dieses Federelements (11) kann ein Einschubgehäuse (1) für eine Computerkomponente (2) im Einschubschacht (10) festgelegt werden. Dazu ist ein Verriegelungselement (3) vorgesehen, welches an einer Wand des Einschubgehäuses (1) angeordnet ist, sodass das Federelement (11) am Einschubschacht (10) eine erste Kante (5) des Verriegelungselements (3) hintergreift und das Einschubgehäuse (1) entgegen der Einschubrichtung festlegt.

## Beschreibung

Computergehäuse mit einem Einschubschacht für Einschubgehäuse von Computerkomponenten, Einschubgehäuse für eine Computerkomponente sowie entsprechende Anordnung

Die Erfindung betrifft ein Computergehäuse mit einem Einschubschacht für Einschubgehäuse von Computerkomponenten, aufweisend eine Befestigungsvorrichtung zum Fixieren eines Einschubgehäuses im Einschubschacht.

Ferner betrifft die Erfindung ein Einschubgehäuse für eine Computerkomponente für ein derartiges Computergehäuse, wobei das Einschubgehäuse dazu eingerichtet ist, in einen Einschubschacht des Computergehäuses eingeschoben zu werden, und wobei das Einschubgehäuse wenigstens ein Verriegelungselement zum Zusammenwirken mit wenigstens einer Befestigungsvorrichtung eines Einschubschachtes aufweist.

Weiterhin betrifft die Erfindung eine Anordnung, umfassend ein entsprechendes Computergehäuse mit einem Einschubschacht und ein entsprechendes Einschubgehäuse für Computerkomponenten.

Die Gehäuse von Computersystemen, insbesondere von Desktopund Tower-Systemen, weisen Einschubschächte auf, um darin Einschubgehäuse von Computerkomponenten aufzunehmen. Derartige Computerkomponenten können beispielsweise Festplatten, Diskettenlaufwerke, CD-Laufwerke, Schnittstellenmodule oder ähnliches sein. Ein Einschubgehäuse wird dabei in der Regel im Einschubschacht befestigt, um einerseits eine fehlerfreie Funktion zu gewährleisten und andererseits ein unbeabsichtigtes Entfernen zu vermeiden. Um dies zu erreichen, ist im Einschubschacht des Computergehäuses eine Befestigungsvorrichtung vorgesehen.

Als Befestigungsvorrichtung findet zum Beispiel eine Schraubverbindung Anwendung, bei der eine Schraube durch eine Bohrung an einer Seitenwand des Einschubschachtes geführt ist und in einer Wirkverbindung mit einer Gewindebohrung an dem Einschubgehäuse der jeweiligen Computerkomponente steht. Der Nachteil einer derartigen Fixierung besteht darin, dass diese sehr zeitaufwändig ist. Denn die Einschubgehäuse der Computerkomponenten werden in der Regel an jeder Seitenwand über mindestens zwei Schraubverbindungen befestigt, sodass eine Computerkomponente im Mittel über vier Schraubverbindungen am Einschubschacht und schließlich im Computergehäuse festgelegt werden muss. Oftmals ist der Zugang zu den Schraubverbindungen durch weitere Computerkomponenten oder Komponenten wie Netzteile, Lüfter oder ähnliches, derart eingeschränkt, dass die Montage zusätzlich behindert wird.

Die Druckschrift DE 20109697 U1 offenbart einen Einschubschacht für Einschubgehäuse, welche an einer Seitenwand schraubenlos über Federelemente am Einschubschacht fixiert werden und an der anderen Seitenwand mit dem Einschubschacht verschraubt werden. Dies reduziert zwar den Aufwand der Montage, erfordert jedoch weiterhin den Einsatz von Schraubverbindungen. Ferner kann sich ein Einschubgehäuse, z.B. bei Vibrationen, an der schraubenlos fixierten Seitenwand aus den Fixierungen der Federelemente lösen und Schaden nehmen.

Aus der Druckschrift DE 102007016903 B3 ist ein Gehäuse für einen Computer mit einem Einschubschacht bekannt, wobei der Einschubschacht eine Befestigungsvorrichtung zur schraubenlosen Montage eines Einschubgehäuses einer Computerkomponente aufweist. Dabei lehrt die Druckschrift, dass die Befestigungsvorrichtung einen federnd gelagerten Verriegelungsbolzen aufweist, welcher durch Einschieben des Einschubgehäuses vorgespannt wird und mittels einer Federkraft beim Erreichen einer Endposition in eine Bohrung des Einschubgehäuses einschnappt. Somit wird das Einschubgehäuse schraubenlos im Einschubschacht fixiert.

Diese Lösung setzt allerdings voraus, dass ein Einschubgehäuse spiel- und toleranzfrei in den Einschubschacht eingesetzt ist. Falls nämlich das Einschubgehäuse ein gewisses Spiel besitzt, so kann der Fall eintreten, dass der angesprochene Verriegelungsbolzen der Befestigungsvorrichtung an einer Gewindebohrung vorbeigeleitet und nicht mit dieser verrastet.

Aus der Druckschrift DE 10244887 B3 ist eine Halteschiene zur Festlegung einer Einschub-Baugruppe in einem Einschubkäfig eines Computers bekannt. Dabei können an die zwei Seitenflächen einer Einschub-Baugruppe zwei Halteschienen montiert werden, wobei die Halteschienen federnde Halteelemente aufweisen zur Zusammenwirkung mit Führungselementen des Einbaukäfigs. Wird die Einschub-Baugruppe mit den Halteschienen in den Einbaukäfig eingeschoben, so verrasten die federnden Halteelemente nacheinander in den Führungselementen des Einbaukäfigs. Dadurch ist zwar eine schraubenlose Montage einer Einschub-Baugruppe gewährleistet, allerdings besteht bei dieser Lösung ein Nachteil darin, dass das System mehrstufig verrastet. Das bedeutet, dass bei Einbau der Einschub-Baugruppe die hinteren Halteelemente zunächst eine Verrastung mit vorderen Führungselementen des Einbaukäfigs überwinden müssen, bevor die Einschub-Baugruppe in eine Endposition eingerastet werden kann. Aufgrund der ruckartigen Bewegungen, die bei Montage einer solchen Lösung erforderlich sind, kann die Einschub-Baugruppe Stößen und Erschütterungen ausgesetzt sein. Dies bedeutet gerade für Laufwerke mit feinmechanischen Elementen eine erhöhte Gefahr der Beschädigung. Ferner sind die federnden Halteelemente aufgrund der Gewichtskraft der Einschub-Baugruppe einer ständigen Belastung unterworfen, sodass sich aufgrund von Vibrationen während des Betriebs die federnde Verbindung lockern kann. Ein weiterer Nachteil der genannten Lösung besteht darin, dass bei einem Blendenüberstand der Frontblende über die sonstigen Abmessungen der Einschub-Baugruppe die Frontblende bei Montage oder Demontage der Einschub-Baugruppe demontiert werden muss, um Zugang zu Rastelementen der Halteschienen zu haben.

Es ist daher eine Aufgabe der vorliegenden Erfindung, ein Computergehäuse mit einem Einschubschacht für Einschubgehäuse von Computerkomponenten, ein Einschubgehäuse von Computerkomponenten sowie deren Anordnung gemäß der eingangs genannten Art zu beschreiben, die eine vereinfachte und kostengünstige sowie sichere Befestigung und Montage von Computerkomponenten gewährleisten.

In einem ersten Aspekt wird diese Aufgabe durch ein Computergehäuse der vorgenannten Art dadurch gelöst, dass die Befestigungsvorrichtung ein Federelement als Befestigungselement umfasst, welches mit einem ersten Ende an der Außenseite des Einschubschachtes festgelegt ist und derart geformt ist, dass es in Einschubrichtung zunächst über eine stumpfwinklige Abwinkelung in den Einschubschacht hineintaucht und über einen spitzen oder rechten Winkel mit einer Kante wieder aus dem Einschubschacht hinausläuft und in ein freies zweites Ende mündet, welches derart vom Einschubschacht weggebogen ist, dass das Federelement über das freie Ende bedient werden kann und wobei die Kante mit einem an der Seitenfläche des Einschubgehäuses angeordneten Verriegelungselement zusammenwirken kann.

Das Einrichten einer derartigen Befestigungsvorrichtung am Einschubschacht hat den Vorteil, dass eine entsprechende Computerkomponente mit ihrem Einschubgehäuse kontinuierlich in den Einschubschacht eingeschoben werden kann, ohne dass ruckartige Bewegungen einer mehrstufigen Verrastung die Montage erschweren und eine Beschädigung der Computerkomponente riskieren. Aufgrund seiner Formung wird das Federelement bei Einschieben einer entsprechenden Komponente über die stumpfwinklige Abwinkelung zunächst nach außen gedrückt, wobei es an der im spitzen oder rechten Winkel geformten Kante schließlich in eine Rastposition am Einschubgehäuse arretieren kann, sodass die Computerkomponente im Einschubschacht festgelegt ist. Die Formung der Kante in einem spitzen oder rechten Winkel hat den Vorteil, dass die Kante als Hintergreifung am Einschubgehäuse der Computerkomponente fungieren kann, sodass die Computerkomponente entgegen der Einschubrichtung fixiert ist. Das Federelement kann über das zweite Ende aus dem Einschubschacht herausgebogen werden, sodass eine Hintergreifung der Kante des Federelements an einem Einschubgehäuse aufgehoben und die entsprechende Computerkomponente freigegeben wird.

Bevorzugt ist an einer Wand im Einschubschacht ein mechanischer Anschlag zum Festlegen des Einschubgehäuses in Einschubrichtung angeordnet. Das bedeutet, dass ein Einschubgehäuse einer Computerkomponente nur maximal bis zu einer festgelegten Position in Einschubrichtung in den Einschubschacht eingeschoben werden kann. Somit wird verhindert, dass ein Einschubgehäuse einer Computerkomponente durch den Einschubschacht in das Computergehäuse hindurchrutscht oder das Einschubgehäuse mit einem Rastelement über das Federelement hinweg geschoben wird, sodass keine stabile Verrastung gewährleistet ist.

Vorzugsweise ist am Anschlag, der Einschubrichtung entgegen eine Feder angeordnet. Diese zusätzliche Feder wird im eingeschobenen Zustand des Einschubgehäuses zusammengedrückt und bewirkt, dass das Einschubgehäuse einen Anpressdruck gegen die Kante des bereits bekannten Federelements am Einschubschacht erfährt, sodass die Hintergreifung der Kante am Einschubgehäuse spielfrei gehalten wird. Damit wird verhindert, dass diese mechanische Verrastung des Einschubgehäuse im Einschubschacht ungewollt, beispielsweise durch Vibrationen während des Betriebs, gelöst wird.

In einem zweiten Aspekt wird die Aufgabe durch ein Einschubgehäuse für ein Computergehäuse der vorgenannten Art gelöst, wobei das Verriegelungselement als Platte ausgeführt ist und am Verriegelungselement Nasen angeformt sind, die in Gewindebohrungen an einer Seitenwand des Einschubgehäuses greifen und das Verriegelungselement an der Seitenwand fixieren, und wobei das Verriegelungselement eine Öffnung aufweist, die zum Hintergreifen einer Kante der Öffnung durch die Befestigungsvorrichtung des Einschubschachtes eingerichtet ist.

Diese Lösung erlaubt ein einfaches Einschieben des Einschubgehäuses in einen Einschubschacht eines Computergehäuses, wobei ein Befestigungselement im Einschubschacht in die vorbereitete Öffnung des Verriegelungselements am Einschubgehäuse eintauchen und das Einschubgehäuse im Einschubschacht festlegen kann. Die Öffnung ist dabei derart geformt und ausgeführt, dass eine sichere Verrastung des Verriegelungselements mit einer Befestigungsvorrichtung im Einschubschacht trotz eines gewissen Spiels möglich ist. Das genannte, als Platte ausgeführte Verriegelungselement hat zudem den Vorteil, dass herkömmliche Einschubgehäuse auf einfache Weise mit einer Verriegelung ausgestattet werden können, ohne komplexe Mechaniken und/oder spezielle Gehäuseformungen vorsehen zu müssen. Die am Verriegelungselement vorbereitete Öffnung bildet dabei eine kostengünstige und zugleich effektive Rastmöglichkeit für Befestigungsmittel in einem Einschubschacht eines Computergehäuses.

Vorzugsweise sind die Nasen als horizontal und/oder vertikal verbreiterte Zapfen ausgeführt. Das Verriegelungselement wird also einfach in die Gewindebohrungen, welche zur herkömmlichen Schraubverbindung des Einschubgehäuses mit dem Einschubschacht vorbereitet sind, eingesteckt und darin gehalten. Somit werden die ohnehin vorhandenen Bohrungen dazu ausgenutzt, das Verriegelungselement am Einschubgehäuse anzubringen, ohne Maßnahmen, wie zum Beispiel Festkleben, durchführen zu müssen. Dies hat auch den Vorteil, dass das Verriegelungselement einfach vom Einschubgehäuse lösbar ist, falls das Einschubgehäuse beispielsweise in herkömmlichen Einschubschächten mit Schraubverbindungen eingesetzt werden soll.

Dadurch, dass das Verriegelungselement an einer Seitenwand des Einschubgehäuses angeordnet ist, kann ein vorhandener Bauraum ausgenutzt werden, der durch einen etwaigen Blendenüberstand am Einschubgehäuse entsteht. Somit wird der Abstand des Verriegelungselements am Einschubgehäuse zu einem Befestigungselement im Einschubschacht eines Computergehäuses trotz Blendenüberstand gering gehalten, sodass eine optimale Fixierung des Einschubgehäuses in einem Einschubschacht und eine optimale Verblendung des Einschubgehäuses durch eine Frontblende gewährleistet sind. Die Ausführung der Nasen als horizontal und/oder vertikal verbreiterte Zapfen erlaubt eine Minimierung von auftretenden Toleranzeffekten, sodass das Verriegelungselement sicher in die Gewindebohrungen am Einschubgehäuse gesteckt werden kann.

In einem weiteren Aspekt wird die Aufgabe durch eine Anordnung, umfassend ein Computergehäuse mit einem Einschubschacht der vorgenannten Art und ein Einschubgehäuse für eine Computerkomponente der vorgenannten Art gelöst, wobei das Einschubgehäuse in den Einschubschacht eingeschoben ist, sodass das Federelement am Einschubschacht mit seiner Kante die Kante des Verriegelungselements am Einschubgehäuse hintergreift und das Einschubgehäuse entgegen der Einschubrichtung festlegt.

Bei dieser Lösung spielen also das plattenförmige Verriegelungselement eines erläuterten Einschubgehäuses und ein entsprechend geformtes Federelement eines ebenfalls erläuterten Einschubschachtes derart zusammen, dass das Federelement im eingeschobenen Zustand des Einschubgehäuses in die Öffnung am Verriegelungselement taucht und das Einschubgehäuse über die rechtwinklige oder spitzwinklige Kante hintergreift. Somit legt das Federelement das Einschubgehäuse entgegen der Einschubrichtung fest. Über einen vorgenannten Anschlag am Einschubschacht wird das Einschubgehäuse in Einschubrichtung festgelegt. Eine erfindungsgemäße Anordnung erlaubt daher eine sichere und einfache Montage eines Einschubgehäuses in einem Einschubschacht.

Weitere vorteilhafte Ausführungen sind in der nachfolgenden Figurenbeschreibung offenbart.

Die Erfindung wird anhand mehrerer Zeichnungen näher erläutet.

Es zeigen:
- Figur 1: eine perspektivische Darstellung eines Einschubge- häuses und seiner Verriegelungselemente,
- Figur 2A: eine erste Ausführungsform von Nasen des Verriege- lungselements,
- Figur 2B: eine zweite Ausführungsform von Nasen des Verriege- lungselements,
- Figur 3: ein Schnittbild eines Teils eines Computergehäuses und eines Teils eines Einschubgehäuses in einer ersten Position,
- Figur 4: ein Schnittbild eines Teils eines Computergehäuses und eines Teils eines Einschubgehäuses in einer zweiten Position,
- Figur 5: ein Schnittbild eines Teils eines Computergehäuses und eines Teils eines Einschubgehäuses in einer dritten Position, und
- Figur 6: ein Schnittbild eines Teils eines Computergehäuses und eines Teils eines Einschubgehäuses in der drit- ten Position gemäß einem weiteren Ausführungsbei- spiel.

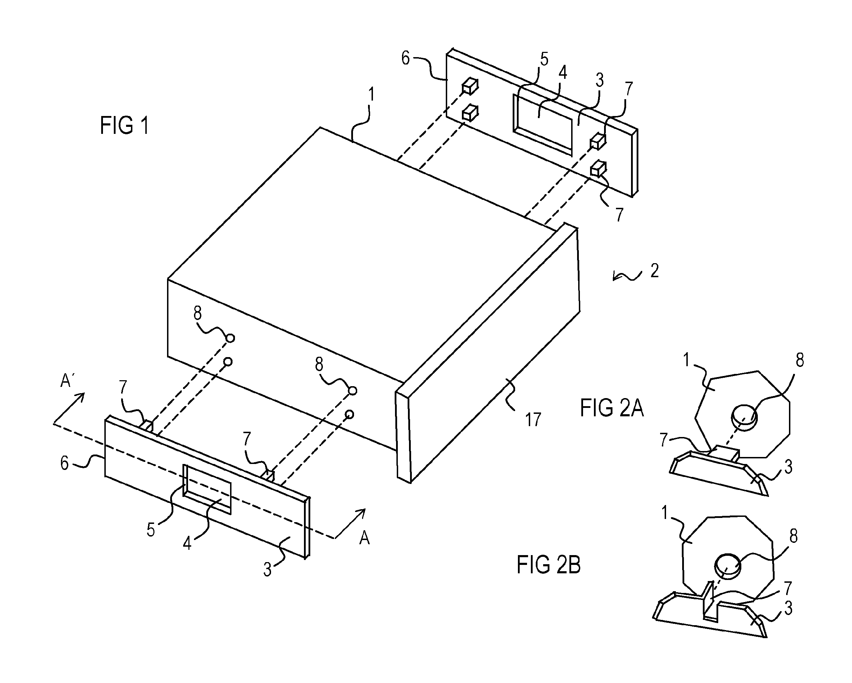

Figur 1 zeigt eine perspektivische Darstellung eines Einschubgehäuses 1 einer Computerkomponente 2. Die Computerkomponente 2 kann beispielsweise eine Festplatte, ein Diskettenlaufwerk, ein CD-Laufwerk, ein Schnittstellenmodul oder ähnliches sein. Das Einschubgehäuse 1 weist eine Frontblende 17 auf, wobei die Computerkomponente 2 als Einschubkomponente in einen Einschubschacht eines Computergehäuses eingeschoben werden kann. Solche Einschubkomponenten finden insbesondere bei Desktop- und Tower-Systemen Anwendung. Im eingeschobenen Zustand der Computerkomponente 2 schließt die Frontblende 17 bündig mit einer Front eines Computergehäuses ab, sodass die Computerkomponente 2 sowohl optisch verblendet, als auch vor Staub und Schmutz geschützt ist. Ferner soll dadurch ein Hineingreifen eines Benutzers in das Computergehäuse unterbunden werden.

Das Einschubgehäuse 1 der Computerkomponente 2 weist an den zwei Seitenflächen jeweils vier Gewindebohrungen 8 auf. In Figur 1 ist dabei lediglich eine Seitenfläche erkennbar. Die Gewindebohrungen 8 dienen einer herkömmlichen Schraubverbindung des Einschubgehäuses 1 mit einem Einschubschacht eines Computergehäuses. Bei herkömmlichen Systemen kann dabei die Computerkomponente 2 über Schrauben in Langlöchern am Einschubschacht des Computergehäuses fixiert werden, in dem die Schrauben durch die Langlöcher hindurch in die Gewindebohrungen 8 am Einschubgehäuse 1 greifen.

In Figur 1 ist jedoch eine Ausführungsform eines erfindungsgemäßen Einschubgehäuses 1 einer Computerkomponente 2 mit zwei Verriegelungselementen 3 dargestellt, wobei die Verriegelungselemente 3 jeweils in die Gewindebohrungen 8 an den Seitenflächen des Einschubgehäuses 1 eingesteckt werden. Hierzu weisen die Verriegelungselemente 3 Nasen 7 auf, welche in die Gewindebohrungen 8 greifen. Die Verriegelungselemente 3 können als Metall- oder Kunststoffplatten ausgeführt sein und weisen jeweils zentriert eine Öffnung 4 auf. Diese Öffnung 4 dient dem Eingreifen eines Befestigungselements an einem Einschubschacht, sodass die Computerkomponente 2 mit ihrem Einschubgehäuse 1 über die Befestigungselemente im Einschubschacht eines Computergehäuses festgelegt werden kann. Insbesondere ist an der Öffnung 4 eine erste Kante 5 ausgebildet, die von einem Befestigungselement an einem Einschubschacht hintergriffen werden kann, sodass das Einschubgehäuse 1 entgegen einer Einschubrichtung im Einschubschacht fixiert ist.

Figur 1 zeigt ebenso, dass die Frontblende 17 am Einschubgehäuse 1 zumindest in Bezug auf die Seitenflächen des Einschubgehäuses 1 einen Blendenüberstand aufweist. Dieser Blendenüberstand kann in Standardgehäusen beispielsweise 1,75 mm betragen. Der Blendenüberstand dient dabei dem trotz Toleranzen sicheren Abdecken der Einbauöffnung, sodass alle Spalte verdeckt sind.

Der Überstand der Frontblende 17 wird nun dazu ausgenutzt, die Verriegelungselemente 3 in den Gewindebohrungen 8 an den Seitenflächen des Einschubgehäuses 1 einzurichten, welche die Computerkomponente 2 verbreitern. Somit kann der Abstand zu einem Befestigungselement eines Einschubschachtes derart gering gehalten werden, dass ein stabiles Eingreifen des Befestigungselements in die Öffnungen 4 der Verriegelungselemente 3 und insbesondere ein Hintergreifen der Kanten 5 gewährleistet sind. Eine derartige Computerkomponente 2 kann also über die Verriegelungselemente 3 in einen Einschubschacht eines Computergehäuses eingeschoben werden, wobei die Verriegelungselemente 3 dazu vorbereitet sind, mit einem Befestigungselement im Einschubschacht zu verrasten. Eine Einbauöffnung des Computergehäuses wird dabei über die überstehende Frontblende 17 abgedeckt. Ein Vorteil dieser Lösung besteht darin, dass eine Fixierung der Computerkomponente 2 in einen Einschubschacht schraubenlos, einfach und sicher hergestellt werden kann.

Figur 2A zeigt eine erste Ausführung einer Nase 7 an einem Verriegelungselement 3. Dabei ist die Nase 7 als horizontal verbreiterter Zapfen ausgeführt, welcher schließlich in eine Gewindebohrung 8 an einer Seitenwand eines Einschubgehäuses 1 gesteckt werden kann.

Figur 2B zeigt eine zweite Ausführung einer entsprechenden Nase 7 am Verriegelungselement 3, welche als vertikal verbreiterter Zapfen ausgeführt ist und ebenfalls in eine Gewindebohrung 8 am Einschubgehäuse 1 einer Computerkomponente 2 gesteckt werden kann.

Die Ausführungen der Nasen 7 gemäß Figur 2A und Figur 2B können an einem Verriegelungselement 3 gemäß Figur 1 in vorteilhafter Weise gemischt auftreten. So sind die Nasen 7 an einem Verriegelungselement 3 wechselweise horizontal oder vertikal verbreitert angeordnet. Dies hat den Vorteil, dass Toleranzen in der Fertigung eines Verriegelungselements 3 nur geringe Auswirkungen auf die Steckbarkeit des Verriegelungselements 3 in die standardisierten Gewindebohrungen 8 eines Einschubgehäuses 1 haben. Somit kann ein Verriegelungselement 3 einfach und stabil fixiert werden, wobei Toleranzen ausgeglichen werden. Weichen die Positionen der Nasen 7 minimal von den Positionen der Gewindebohrungen 8 ab, so werden die horizontal oder vertikal verbreiterten Nasen 7 automatisch in das Zentrum der Öffnungen 8 gedrückt. Die Nasen 7 können dabei direkt an ein Verriegelungselement 3 angeformt sein oder aber auch beispielsweise als Gummielemente am Verriegelungselement 3 festgelegt sein. Es ist auch denkbar, dass die Nasen 7 eine gummierte Beschichtung aufweisen, sodass sie in den Öffnungen 8 am Einschubgehäuse 1 festklemmen.

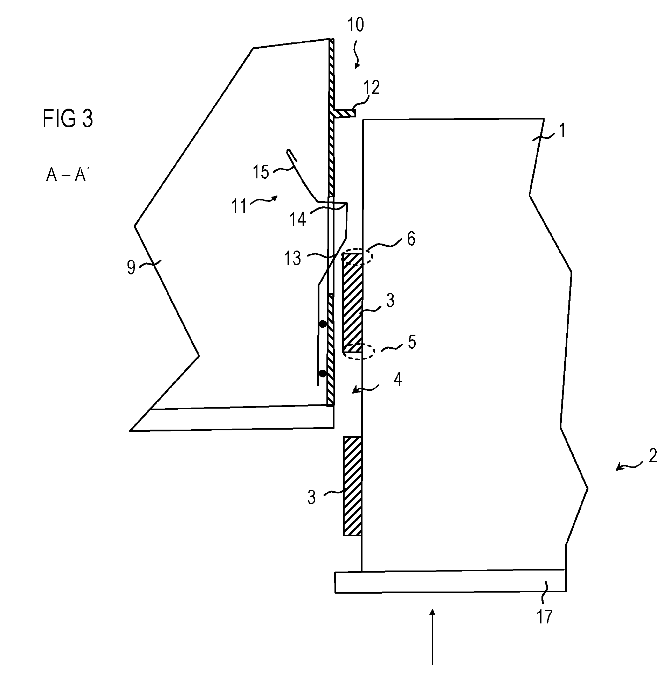

Figur 3 zeigt ein Schnittbild eines Teils eines Computergehäuses 9 und eines Teils eines Einschubgehäuses 1 einer Computerkomponente 2 in einer ersten Position gemäß einer in Figur 1 eingezeichneten Schnittgeraden A-A'. Die Computerkomponente 2 ist mit ihrem Einschubgehäuse 1 zum Teil in einen Einschubschacht 10 des Computergehäuses 9 eingeschoben. An einer Seitenwand des Einschubgehäuses 1 befindet sich das aufgesteckte Verriegelungselement 3, welches in dieser Schnittbilddarstellung durch die Öffnung 4 in zwei Teile aufgeteilt ist. Figur 3 zeigt deutlich die vorgenannte erste Kante 5 der Öffnung 4 am Verriegelungselement 3, welche zum Festlegen des Einschubgehäuses 1 entgegen der Einschubrichtung herangezogen wird, was nachfolgend näher beschrieben wird. Ferner ist am in Einschubrichtung vorderen Bereich des Verriegelungselements 3 eine zweite Kante 6 ausgebildet, die zur Fixierung des Einschubgehäuses 1 in Einschubrichtung dient. Auch dies wird nachfolgend näher beschrieben. Figur 3 zeigt deutlich, dass das Verriegelungselement 3 die Breite des Einschubgehäuses 1 bis zum Rand der überstehenden Frontblende 17 ausgleicht. Die Einschubrichtung der Computerkomponente 2 ist mit einem Pfeil gekennzeichnet.

Am Computergehäuse 9 ist ein Federelement 11 angeordnet, welches mit einem ersten Ende am Computergehäuse 9 festgelegt ist. Das Federelement 11 ist derart geformt, dass es in Einschubrichtung zunächst über eine stumpfwinklige Abwinkelung 13 in den Einschubschacht 10 hineintaucht, wobei anschließend eine Kante 14 im rechten Winkel angeformt ist, sodass das Federelement 11 den Einschubschacht 10 über diese rechtwinklige Kante 14 wieder verlässt. Schließlich mündet das Federelement 11 in ein freies zweites Ende 15, welches derart vom Einschubschacht 10 weggebogen ist, dass das Federelement 11 über das freie Ende 15 bedient werden kann. Bedienen bedeutet hierbei, dass das Federelement 11 über das freie Ende aus dem Einschubschacht 10 herausgebogen wird. Das Federelement 11 dient dem Fixieren des Einschubgehäuses 1 entgegen der Einschubrichtung. Ferner befindet sich im Einschubschacht 10 am Computergehäuse 9 angeordnet ein Anschlag 12. Dieser Anschlag 12 legt das Einschubgehäuse 1 in Einschubrichtung in einer Endposition fest.

In der in Figur 3 dargestellten ersten Position des Einschubgehäuses 1 befindet sich die zweite Kante 6 des Verriegelungselements 3 in Einschubrichtung noch hinter dem Federelement 11, welches in einer Ruheposition verweilt. Das Einschubgehäuse 1 kann am Verriegelungselement 3 beispielsweise in Führungsschienen im Einschubschacht 10 geführt werden. Entsprechende Führungsschienen dienen der Stabilisierung des Einschubgehäuses 1 während des Einschiebens, sind jedoch in Figur 3 nicht dargestellt.

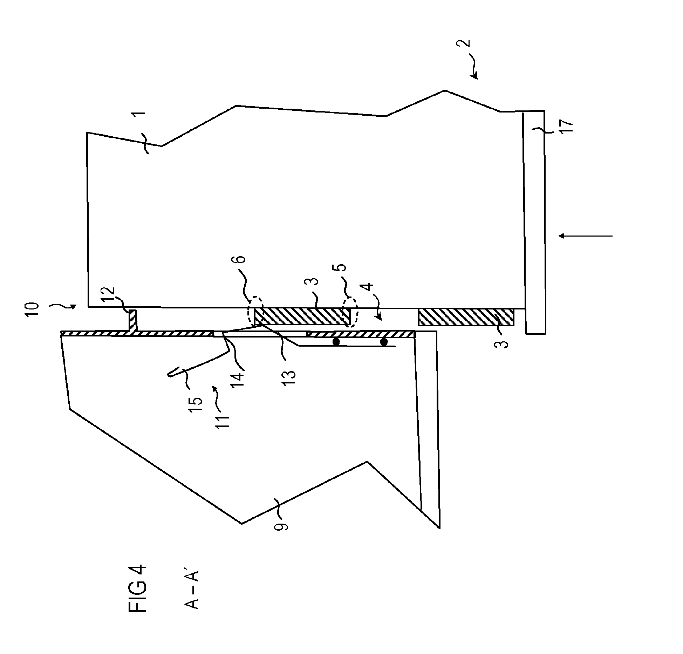

Figur 4 zeigt ein Schnittbild aller Komponenten gemäß Figur 3, jedoch in einer zweiten Position des Einschubgehäuses 1. Hierbei berührt die zweite Kante 6 des Verriegelungselements 3 die stumpfwinklige Abwinkelung 13 des Federelements 11 und wird entlang der stumpfwinkligen Abwinkelung 13 geführt. Über die zweite Kante 6 des Verriegelungselements 3 wird das Federelement 11 schließlich an der Abwinkelung 13 nach außen aus dem Einschubschacht 10 herausgebogen. Dabei verlässt die Kante 14 am Federelement 11 vollständig den Einschubschacht 10. In dieser Position ist das Federelement 11 also bereits vorgespannt, wobei eine endgültige Fixierung des Einschubgehäuses 1 noch nicht durchgeführt ist.

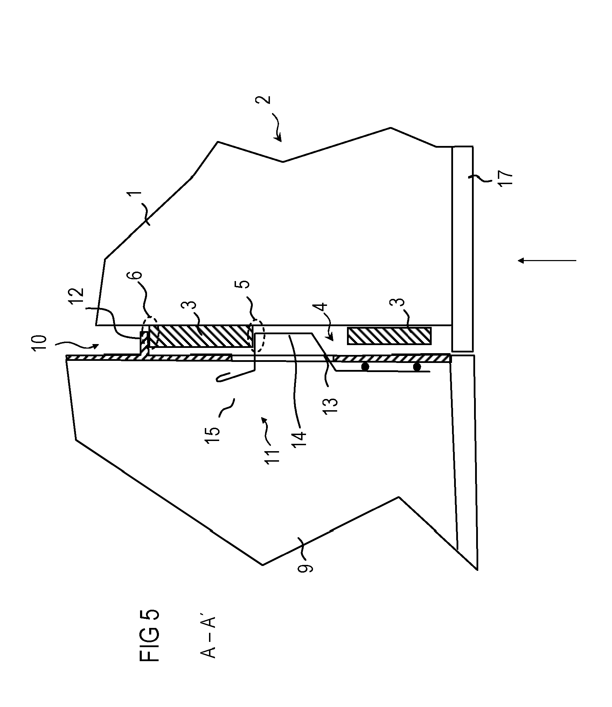

Figur 5 zeigt ein Schnittbild aller Komponenten gemäß Figur 3 und Figur 4, jedoch nun in einer endgültigen dritten Position des Einschubgehäuses 1, welches vollständig im Einschubschacht 10 des Computergehäuses 9 fixiert ist. Dazu wurde das Einschubgehäuse 1 in Einschubrichtung vollständig in den Einschubschacht 10 eingeschoben, bis die zweite Kante 6 des Verriegelungselements 3 am mechanischen Anschlag 12 im Einschubschacht 10 anschlägt. Somit wurde der vordere Teil des Verriegelungselements 3 zwischen der ersten Kante 5 und der zweiten Kante 6 vollständig am Federelement 11 vorbeigeführt. Da das Federelement 11 gemäß Figur 4 in einer vorgespannten Position gehalten wurde, schnappt es in der Position gemäß Figur 5 zurück in die Ruheposition, wobei die Kante 14 am Federelement 11 die erste Kante 5 am Verriegelungselement 3 in der Öffnung 4 hintergreift. Das Federelement 11 taucht somit im Einschubschacht 10 vollständig in die Öffnung 4 ein. In der verrasteten Ruheposition wird das Federelement also nicht weiter belastet, sodass das Federelement 11 seine Stabilität beibehält und eine lange mittlere Lebenszeit aufweist.

Aufgrund der Formung des Federelements 11 an der Kante 14 im rechten Winkel, ist ein erneutes Herausziehen des Einschubgehäuses 1 entgegen der Einschubrichtung nicht mehr möglich, da das Federelement 11 die erste Kante 5 vollständig hintergreift. Im Unterschied zum Einschubvorgang gemäß Figur 4 verharrt das Federelement 11 nun in seiner Ruheposition und kann durch das bloße Herausziehen des Einschubgehäuses 1 nicht mehr aus dem Einschubschacht 10 herausgebogen werden. Das Einschubgehäuse 1 ist entgegen der Einschubrichtung fest im Einschubschacht 10 verankert. Der Anschlag 12 hält das Einschubgehäuse 1 in Einschubrichtung fest. Somit liegt der Teil des Verriegelungselements 3 zwischen der ersten Kante 5 und der zweiten Kante 6 zwischen der Kante 14 des Federelements 11 und dem Anschlag 12, sodass die Position des Einschubgehäuses 1 nicht mehr verändert werden kann.

Zur Demontage der Computerkomponente 2 mit ihrem Einschubgehäuse 1 aus dem Einschubschacht 10 muss das Federelement 11 durch einen Bediener am freien Ende 15 vom Einschubschacht 10 weggedrückt und somit aus dem Einschubschacht 10 herausgebogen werden. Dabei muss ein Benutzer das Federelement 11 so weit aus dem Einschubschacht 10 herausbiegen, dass die Kante 14 des Federelements 11 die Hintergreifung der ersten Kante 5 vollständig löst. Es muss also eine Position des Federelements 11 gemäß Figur 4 durch einen Benutzer erzeugt werden. Dann ist der Ausfahrweg der Computerkomponente 2 frei. Das Einschubgehäuse 1 kann entgegen der Einschubrichtung aus dem Einschubschacht 10 an der Frontblende 17 herausgezogen werden.

Aufgrund des Federelements 11 im Einschubschacht 10 des Computergehäuses 9 in Verbindung mit dem Verriegelungselement 3 und dessen Öffnung 4 am Einschubgehäuse 1 der Computerkomponente 2 kann ein kostengünstiger Verriegelungsmechanismus gebildet werden, wobei das Einschubgehäuse 1 dennoch einfach, stabil und sicher in Einschubrichtung in den Einschubschacht 10 eingeschoben und darin fixiert werden kann. Ein erneutes Herausziehen des Einschubgehäuses 1 ohne gleichzeitiges Bedienen des Federelements 11 ist nicht möglich. Zudem deckt die Frontblende 17 am Einschubgehäuse 1 die Computerkomponente 2 bündig mit dem Computergehäuse 9 ab.

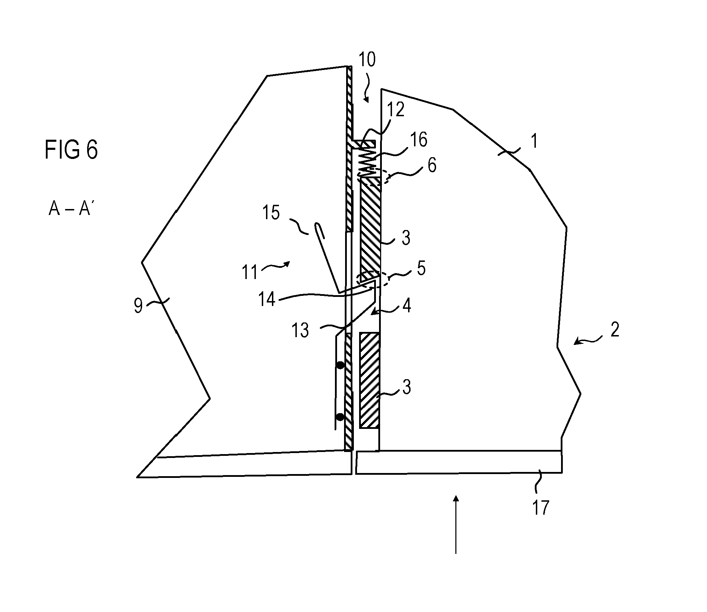

Figur 6 zeigt schließlich das Schnittbild gemäß Figur 5 in der verrasteten dritten Position des Einschubgehäuses 1, jedoch in einer weiteren Ausführungsform des Verriegelungsmechanismus. Hierbei ist das Federelement 11 an der Kante 14 in einem spitzen Winkel, also kleiner als 90°, geformt. Eine entsprechende Gegenform weist die erste Kante 5 des Verriegelungselements 3 auf. Ferner weist der Anschlag 12 eine Feder 16 auf, welche am Anschlag 12, der Einschubrichtung entgegen angeordnet ist.

In der Ausführung gemäß Figur 6 schlägt die zweite Kante 6 des Verriegelungselements 3 in der Endposition an der Feder 16 an, wodurch diese zusammengedrückt wird. Somit baut die Feder 16 eine Druckkraft entgegen der Einschubrichtung auf, wobei die erste Kante 5 am Verriegelungselement 3 in Kontakt mit dem Federelement 11 an der Kante 14 gehalten wird. Aufgrund der spitzwinkligen Ausführung der Kante 14 am Federelement 11 sowie der Gegenform der ersten Kante 5 am Verriegelungselement 3 verhaken sich das Verriegelungselement 3 und das Federelement 11. Wegen des Anpressdrucks durch die Feder 16 wird somit die Hintergreifung des Federelements 11 an der Kante 14 in Zusammenwirken mit der ersten Kante 5 am Verriegelungselement 3 stabil gehalten. Ein Lösen der Hintergreifung durch bloßes Bedienen des Federelements 11 am freien Ende 15 ist ohne Weiteres nicht möglich, da das Federelement 11 mit der ersten Kante 5 des Verriegelungselements 3 verhakt ist.

Zum Lösen der Hintergreifung muss deshalb das Einschubgehäuse 1 in Einschubrichtung von einem Benutzer gegen die Feder 16 gedrückt werden, sodass der Anpressdruck der ersten Kante 5 an der Kante 14 des Federelements 11 gelöst wird. Erst dann kann das Federelement 11 am freien Ende 15 von einem Benutzer aus dem Einschubschacht 10 herausgebogen werden, sodass das Einschubgehäuse 1 gemäß der vorgenannten Art und Weise entgegen der Einschubrichtung aus dem Einschubschacht 10 herausgenommen werden kann. Diese Ausführungsform beschreibt also ein noch sicheres Verrasten eines Einschubgehäuses 1 in einem Einschubschacht 10 über ein erfindungsgemäßes Zusammenspiel eines Federelements 11 mit einem Verrastungselement 3.

Ein dargestelltes Federelement 11 kann als Blattfederelement aus Metall oder Kunststoff gefertigt sein. Eine Festlegung des Federelements 11 am Computergehäuse 9 kann dabei auf vielerlei Art und Weise, beispielsweise durch Nieten, Prägen, Löten oder Schweißen durchgeführt werden. Es ist ebenfalls denkbar, den Anschlag 12 im Einschubschacht 10 derart anzuordnen, dass ein Einschubgehäuse 1 an einer hinteren Kante am Anschlag 12 anschlägt. Allerdings ist es vorteilhafter, den Anschlag 12 derart zu positionieren, dass er, wie in den Figuren dargestellt, mit einer Außenkante 6 des Verriegelungselements 3 zusammenwirkt. Denn das Verriegelungselement 3 wird in Gewindebohrungen am Einschubgehäuse 1 fixiert, wobei die Gewindebohrungen von der Frontblende 17 aus in einem standardisierten Abstand vorgesehen sind. Somit kann über ein standardisiertes Verriegelungselement 3 jegliches Einschubgehäuse 1 variabler Länge im Einschubschacht 10 verrastet werden. Würde ein Anschlag 12 jedoch mit der Hinterkante eines Einschubgehäuses 1 zusammenwirken, so wäre eine standardisierte Fixierung des Einschubgehäuses 1 bei variabler Länge nicht möglich.

In nicht dargestellten Ausführungsformen kann ein Federelement 11 ein freies Ende 15 auch an der stumpfwinkligen Abwinkelung 13 aufweisen, wobei das Federelement 11 schließlich im Anschluss an die Kante 14 über ein zweites Ende am Computergehäuse 9 festgelegt ist. Die Ausführung aller Teile und Komponenten in den dargestellten Zeichnungen ist lediglich beispielhaft gewählt. Es ist denkbar, einen dargestellten Verriegelungsmechanismus bestehend aus einem Federelement 11 und einem Verriegelungselement 3 jeweils auf beiden Seitenflächen eines Einschubgehäuses 1 oder jeweils nur an einer Seitenfläche vorzusehen. Im letzten Fall müsste an der anderen Seitenfläche eine entsprechende Führung im Einschubschacht 10 vorgesehen sein. Es ist auch möglich, diesen Verriegelungsmechanismus anstatt an den Seitenflächen auf einer Ober- und/oder Unterseite des Einschubgehäuses 1 vorzusehen. Entsprechende Aussparungen am Einschubschacht 10 des Computergehäuses 9 müssten dann geschaffen werden, beispielsweise durch einen Blendenüberstand an der Ober- und/oder Unterseite des Einschubgehäuses 1. Das Prinzip ist dabei zur Befestigung jeglichen Laufwerkstyps übernehmbar.

Ferner kann ein dargestellter Befestigungsmechanismus eines Einschubschachts 10, bestehend aus einem Federelement 11 und einem Anschlag 12, auch mit anderen, nicht dargestellten Rastelementen herkömmlicher Einschubgehäuse zusammenwirken, sodass die Einschubgehäuse am Einschubschacht 10 fixiert werden können.

Ebenso ist es möglich, dass ein dargestelltes Verriegelungselement 3 eines Einschubgehäuses 1 auch mit anderen, nicht dargestellten Befestigungsmechanismen herkömmlicher Einschubschächte in Computergehäusen entsprechend zusammenwirken kann.

### Bezugszeichenliste

- 1: Einschubgehäuse
- 2: Computerkomponente
- 3: Verriegelungselement
- 4: Öffnung
- 5: erste Kante am Verriegelungselement
- 6: zweite Kante am Verriegelungselement
- 7: Nase
- 8: Gewindebohrung
- 9: Computergehäuse
- 10: Einschubschacht
- 11: Federelement
- 12: Anschlag
- 13: stumpfwinklige Abwinkelung
- 14: Kante am Federelement
- 15: freies Ende des Federelements
- 16: Feder am Anschlag
- 17: Frontblende

## Patentansprüche

1. Computergehäuse (9) mit einem Einschubschacht (10) für Einschubgehäuse (1) von Computerkomponenten (2), aufweisend eine Befestigungsvorrichtung zum Fixieren eines Einschubgehäuses (1) im Einschubschacht (10),
**dadurch gekennzeichnet, dass**
die Befestigungsvorrichtung ein Federelement (11) als Befestigungselement umfasst, welches mit einem ersten Ende an der Außenseite des Einschubschachtes (10) festgelegt ist und derart geformt ist, dass es in Einschubrichtung zunächst über eine stumpfwinklige Abwinkelung (13) in den Einschubschacht (10) hineintaucht und über einen spitzen oder rechten Winkel mit einer Kante (14) wieder aus dem Einschubschacht (10) hinausläuft und in ein freies zweites Ende (15) mündet, welches derart vom Einschubschacht (10) weggebogen ist, dass das Federelement (11) über das freie Ende (15) bedient werden kann und wobei die Kante (14) mit einem an der Seitenfläche des Einschubgehäuses (1) angeordneten Verriegelungselement (3) zusammenwirken kann.

2. Computergehäuse (9) nach Anspruch 1,
**dadurch gekennzeichnet, dass**
an einer Wand im Einschubschacht (10) ein mechanischer Anschlag (12) zum Festlegen des Einschubgehäuses (1) in Einschubrichtung angeordnet ist.

3. Computergehäuse (9) nach Anspruch 2,
**dadurch gekennzeichnet, dass**
am Anschlag (12), der Einschubrichtung entgegen, eine Feder (16) angeordnet ist.

4. Einschubgehäuse (1) für eine Computerkomponente (2) für ein Computergehäuse (9) nach einem der Ansprüche 1 bis 3, wobei das Einschubgehäuse (1) wenigstens ein Verriegelungselement (3) zum Zusammenwirken mit der Befestigungsvorrichtung des Einschubschachtes (10) aufweist, wobei das Verriegelungselement (3) als Platte ausgeführt ist und am Verriegelungselement (3) Nasen (7) angeformt sind, die in Gewindebohrungen (8) an einer Seitenwand des Einschubgehäuses (1) greifen und das Verriegelungselement (3) an der Seitenwand fixieren, und wobei das Verriegelungselement (3) eine Öffnung (4) aufweist, die zum Hintergreifen einer Kante (5) der Öffnung (4) durch die Befestigungsvorrichtung des Einschubschachtes (10) eingerichtet ist.

5. Einschubgehäuse (1) nach Anspruch 4,
**dadurch gekennzeichnet, dass**
die Nasen (7) als horizontal und/oder vertikal verbreiterte Zapfen ausgeführt sind.

6. Anordnung, umfassend ein Computergehäuse (9) mit einem Einschubschacht (10) nach einem der Ansprüche 1 bis 3 und ein Einschubgehäuse (1) für eine Computerkomponente (2) nach Anspruch 4 oder 5, wobei das Einschubgehäuse (1) in den Einschubschacht (10) eingeschoben ist, sodass das Federelement (11) am Einschubschacht (10) mit seiner Kante (14) die Kante (5) des Verriegelungselements (3) am Einschubgehäuse (1) hintergreift und das Einschubgehäuse (1) entgegen der Einschubrichtung festlegt.
